# EUROPÄISCHE PATENTSCHRIFT

(11) **EP 3 247 601 B1**
(45) Veröffentlichungstag und Bekanntmachung des Hinweises auf die Patenterteilung: **16.12.2020**
(21) Anmeldenummer: 16701290.5
(22) Anmeldetag: 21.01.2016
(51) Int. Cl.: B60T 13/66, B60T 7/08, B60T 8/17

(54) **ELEKTRONISCHES PARKBREMSSYSTEM MIT EXTERNER ANSTEUERUNG**
ELECTRONIC PARKING BRAKE SYSTEM WITH EXTERNAL ACTIVATION
SYSTÈME DE FREIN DE STATIONNEMENT ÉLECTRONIQUE À COMMANDE EXTERNE

(30) Priorität: 23.01.2015 DE 102015000894
(43) Veröffentlichungstag der Anmeldung: 29.11.2017
(73) Patentinhaber: KNORR-BREMSE Systeme für Nutzfahrzeuge GmbH, 80809 München (DE)
(72) Erfinder: BALOGH, Levente, 6000 Kecskemet (HU)
(86) Internationale Anmeldenummer: PCT/EP2016/051205
(87) Internationale Veröffentlichungsnummer: WO 2016/116548

(56) Entgegenhaltungen:
- EP-A2- 1 541 437
- WO-A1-01/57647
- DE-A1-102013 007 881
- US-A- 5 255 962
- US-A1- 2004 015 281
- US-B1- 6 256 570

## Beschreibung

Die vorliegende Erfindung betrifft ein elektronisches Parkbremssystem eines Kraftfahrzeugs, umfassend einen in eine Bremsposition zur Bremskraftbeaufschlagung eines Rades des Kraftfahrzeugs bewegbaren Bremsaktuator ein manuell betätigbares Betätigungselement zur Ansteuerung des Bremsaktuators durch einen Benutzer, eine mit dem Betätigungselement elektronisch kommunizierende Steuereinheit zur Ansteuerung eines mit dem Bremsaktuator verbundenen Steuerventils. Ferner betrifft die Erfindung ein Kraftfahrzeug, vorzugsweise einen Lastkraftwagen, mit einem solchen Parkbremssystem, sowie ein Verfahren zum Betrieb des Parkbremssystems.

Das Einsatzgebiet der Erfindung erstreckt sich auf Kraftfahrzeuge, vorzugsweise Lastkraftwagen, die über ein elektronisch ansteuerbares Parkbremssystem verfügen. Dabei wird durch Betätigung beziehungsweise Auslenkung eines vorzugsweise monostabilen Betätigungselements durch den Fahrer eine Anfrage an eine elektronische Steuereinheit des Parkbremssystems übermittelt, die dem Parkbremssystem zugehörigen Bremsen, beispielsweise Feststellbremsen oder Betriebsbremsen, anzuziehen oder zu lösen.

Aus der DE 10 2005 011 415 A1 geht ein Betriebsbremssystem hervor, welches über ein Bremspedal manuell betätigbar ist und welches darüber hinaus auf zusätzliche Sensorik zugreifen kann, um die manuelle Betätigung durch eine Vorbelastung der Betriebsbremsen zu ergänzen.

Im allgemeinen Stand der Technik bekannt sind elektronisch betätigbare Parkbremssysteme, die gegebenenfalls beispielsweise mit Sensorik ausgestattet sind, um die Fahrtgeschwindigkeit oder den Luftdruck in Teilen des Parkbremssystems zu messen. Eine Kommunikation mit anderen Systemen, beispielsweise dem Betriebsbremssystem, ist dabei nicht vorgesehen. Im Gegensatz dazu kann beispielsweise das Fahrtassistenzsystem über die Betriebsbremsen verfügen, beispielsweise um den Fahrer bei Bremsungen oder gefährlichen Situationen zu unterstützen. Die Parkbremsen lassen sich jedoch nur über ein typischerweise monostabiles Betätigungselement auslösen. Somit ist der Fahrer unter anderem nicht in der Lage, die Parkbremse nur für einzelne Achsen des Fahrzeuges oder getrennt für verschiedene Teile des Fahrzeugs, wie Sattelschlepper oder Anhänger, auszulösen. Außerdem ist es möglich, dass beispielsweise in Folge einer Notbremsung oder Vollbremsung ein Teil des Betätigungselementes beschädigt wird oder beispielsweise der Fahrer das Bewusstsein verliert, wodurch die Parkbremsen nicht mehr angelegt werden können. Auch ist es dem Fahrer aufgrund der Beschränkung auf Bedienung über ein einzelnes Betätigungselement nicht möglich, die Parkbremsen von einem Bereich außerhalb der Fahrkabine zu betätigen, in der sich das Betätigungselement befindet. Ein solches oder ähnliches System ist aus der US 2004/015281 A1 und WO 01/57647 A1 bekannt.

Es ist die Aufgabe der vorliegenden Erfindung, ein Parkbremssystem zu schaffen, welches flexibel und in Abhängigkeit anderer Systeme bedienbar ist.

Die Aufgabe wird ausgehend von einem Parkbremssystem gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Steuereinheit über eine Schnittstelle zur Kommunikation mit einem, den Betriebszustand des Kraftfahrzeugs definierende Sensoren und / oder Aktoren umfassenden, externen Steuersystem verfügt, sowie über Rechenanweisungen zur Auswertung eines durch das Steuersystem versandten Datenpakets, zur Ansteuerung des Bremsaktuators des Parkbremssystems bei entsprechender Auswertung des Datenpakets.

Der Vorteil der Erfindung kann unter anderem darin gesehen werden, dass das Parkbremssystem somit flexibel durch verschiedene elektrische Systeme des Kraftfahrzeugs oder beispielsweise über den Fahrer über Betätigungsmittel angesteuert werden kann, die komplexere Zustände und Abläufe zulassen als das üblicherweise monostabile, eindimensional bewegliche Betätigungselement des Parkbremssystems.

Vorzugsweise gehört das mindestens eine externe Steuersystem dabei zu einer Gruppe von Steuersystemen, der unter anderem Fahrtassistenzsysteme, Betriebsbremsanlagensysteme, Getriebesysteme, Bodybuilder-Module, Mensch-Maschine-Schnittstellen, Anhängerkontrollsysteme und Niveauregelsysteme zugeordnet sind. Bodybuilder-Module sind Systeme, die modular vorzugsweise auf Lastkraftwagen installiert werden können, um zusätzliche Aufgaben zu übernehmen. Beispielsweise handelt es sich um Hebebühnen für Leitern oder Container oder um Pumpen, Tanks oder Müllpressen. Mensch-Maschine-Schnittstellen können Bedienelemente beliebiger Art beispielsweise auf einem Armaturenbrett des Kraftfahrzeugs sein.

Es kann sich aber auch um gänzlich andere, hier nicht einzeln aufgeführte Steuersysteme handeln. Wichtig und erfindungsgemäß vorgesehen ist allein die Ansteuerung der Parkbremsen über ein anderes als das Parkbremssystem.

Der Vorteil dieser Lösung ist darin zu sehen, dass das Parkbremssystem oder das Parkbremssystem beispielsweise über einen dafür standardmäßig vorgesehenen Datenbus, beispielsweise einen CAN-Bus (Controller Area Network Bus) kommunizieren und von an diesen Datenbus angeschlossenen externen Systemen beeinflusst werden kann. Durch die erfindungsgemäß vorgesehene Schnittstelle zu externen Systemen können sowohl einzelne Achsen separat gebremst werden als auch die Parkbremsen in Abhängigkeit äußerer Umstände, gegebenenfalls unter Beachtung des Betätigungselements, aber ohne zwingender Abhängigkeit davon, angelegt und gelöst werden.

Gemäß einer bevorzugten Ausführungsform der Erfindung basiert die Kommunikation auf verschlüsselten, eine Prioritätsinformation und/oder eine Identifikation des kommunizierenden Steuersystems enthaltenden Datenpaketen.

Vorteil der Verschlüsselung besteht einerseits in einer Absicherung gegen Angriffe von vernetzten Systemen, als auch in einer ermöglichten Fehlererkennung im Bezug auf die Datenübertragung, beispielsweise durch Prüfsummenbildung. Die Miteinbeziehung einer Prioritätsinformation und einer Identifikation kann dazu verwendet werden, Anforderungen von verschiedenen Systemen gegeneinander abzuwägen.

Die Erfindung sieht vor, dass das Kraftfahrzeug einen Sattelschlepper und einen Anhänger umfasst, und dass durch das externe Steuersystem über die Steuereinheit unabhängig voneinander eine zum Parkbremssystem gehörige Betriebsbremse des Anhängers und eine ebenfalls zum Parkbremssystem gehörige Feststellbremse des Sattelschleppers ansteuerbar sind.

Der Vorteil dieser Ausführungsform kann darin gesehen werden, dass es somit möglich ist, verschiedene Bremsstrategien durchzuführen, wie dies mit einem im allgemein bekannten Stand der Technik vorgesehenen eindimensionalen Betätigungselement nicht möglich ist. Beispielsweise kann durch eine Anfrage des Fahrers über eine entsprechende Schnittstelle beispielsweise eine Streckbremsfunktion ausgelöst werden, bei der ein Anhänger gebremst wird und der Sattelschlepper ungebremst bleibt. Über im allgemein bekannten Stand der Technik typische Parkbremssysteme lässt sich üblicherweise nur mittels eines Betätigungselements in Form eines Parkbremshebels undifferenziert jede Bremse des Parkbremssystems anlegen. Um eine solche Streckbremsfunktion auszuführen, ist dann beispielsweise ein zweites, diesem einen Zweck zugeordnetes Betätigungselement vorgesehen.

Die Erfindung betrifft darüber hinaus ein Fahrzeug, vorzugsweise einen Lastkraftwagen, welcher über ein solches elektronisch betätigbares, mit externen Systemen kommunizierendes Parkbremssystem verfügt.

Ein die Erfindung betreffendes Verfahren sieht vor, dass durch ein externes Steuersystem ein Datenpaket mit einer Aufforderung an das elektronische Parkbremssystem gesendet wird, diese Aufforderung durch die Steuereinheit ausgewertet wird, und bei positiver Auswertung ein Bremsaktuator des Parkbremssystems angesteuert wird.

Bevorzugterweise wird bei der Auswertung des Datenpakets durch die Steuereinheit ein Parameter aus einer Parametergruppe berücksichtigt, dem die Funktionstüchtigkeit und/oder den Betriebszustand des Betätigungselements zugeordnet sind, wobei die im Datenpaket enthaltene Anfrage in Abhängigkeit des Parameters ausgeführt oder ignoriert oder zeitlich verzögert und/oder in ihrer Priorität herabgesetzt wird.

Der Vorteil dieses Verfahrens besteht darin, dass die Steuereinheit des Parkbremssystems bei Anfragen zur Ansteuerung der Parkbremsen berücksichtigen kann, ob das Betätigungselement funktionstüchtig oder beschädigt ist. Darüber hinaus kann auch der Betriebszustand des Betätigungselements berücksichtigt werden, was bedeutet, dass beispielsweise im typischen Falle eines monostabilen Betätigungselementes Anfragen an das Parkbremssystem ignoriert oder zurückgestellt oder in ihrer Priorität herabgesetzt werden, wenn sich das Betätigungselement in einer anderen als der monostabilen Position befindet. Dies ist beispielsweise der Fall, wenn an einem Hebel mit einer mittleren stabilen Position gezogen oder gedrückt wird, oder wenn ein Knopf mit einer oberen stabilen Position ausgelenkt beziehungsweise gedrückt wird. Somit wird gewährleistet, dass Steuerungsanfragen, die direkt von dem Fahrer stammen, stärker Beachtung geschenkt wird, als solchen, die automatisiert abgesetzt werden. Auch wird beachtet, ob der Fahrer beispielsweise aufgrund eines beschädigten Betätigungselementes nicht mehr in der Lage ist, die Parkbremsen auszulösen.

Bei einer bevorzugten Ausführungsform des die Erfindung betreffenden Verfahrens wird nach einer Notbremsung durch ein Fahrtassistenzsystem ein Datenpaket mit einer Aufforderung zur Bewegung des Bremsaktuators in dessen Bremsposition an die Steuereinheit gesendet.

Der Vorteil ist hierin darin zu sehen, dass die Betriebsbremsen, die durch das Fahrtassistenzsystem oder durch den Fahrer betätigt werden können, typischerweise als zeitlich begrenzte Maßnahme eingesetzt werden, da ein Luftdruck in den die Betriebsbremsen auslösenden Druckluftleitungen aufrechterhalten werden muss, während Feststellbremsen als dauerhaftes Bremssystem auch beispielsweise ohne Druckluftversorgung greifen. Auch wird durch dieses Verfahren gewährleistet, dass bei einer Beschädigung des Betätigungselementes oder beispielsweise bei Bewusstlosigkeit des Fahrers dennoch die Parkbremsen angelegt werden.

Ein weiteres, die Erfindung verbesserndes Verfahren sieht vor, dass durch ein Fahrtassistenzsystem zum Starten oder Stoppen des Fahrzeugs ein Datenpaket mit einer Aufforderung zur Bewegung eines Bremsaktuators an die Steuereinheit gesendet wird.

Der Vorteil dieses Verfahrens besteht darin, dass die Parkbremsen sowohl beim Anfahren gelöst, als auch beim Abstellen des Fahrzeugs angelegt werden können, insbesondere auch dann, wenn der Fahrer dies vergisst oder wenn das Betätigungselement beschädigt ist.

Eine weitere die Erfindung verbessernde Ausbildung des Verfahrens sieht vor, dass durch ein Bodybuilder-Modul ein Datenpaket mit einer Aufforderung zur Bewegung des Bremsaktuators an die Steuereinheit gesendet wird.

Der Vorteil dieser Ausbildungsform ist insbesondere bei Bodybuilder-Modulen zu sehen, die Steuerungseinheiten wie beispielsweise Betätigungselemente außerhalb der Führerkabine des Kraftfahrzeugs besitzen. Beispielsweise können somit über eine Schalttafel auf einer Hebebühne insbesondere außerhalb der Fahrerkabine die Parkbremsen angezogen oder gelöst werden.

Eine weitere bevorzugte Ausführungsform des Verfahrens sieht vor, dass durch ein Niveauregelsystem ein Datenpaket mit einer Aufforderung zur Bewegung des Bremsaktuators an die Steuereinheit gesendet wird.

Der Vorteil hierbei ist darin zu sehen, dass bei typischen Niveauregelsystemen insbesondere der horizontale Abstand der Achsen des Fahrzeugs zueinander erhöht oder verringert wird, um eine auf diesen Achsen montierte Vorrichtung respektive abzusenken oder anzuheben. Um eine solche Veränderung des horizontalen Abstandes der Achsen zueinander zu ermöglichen, ist es daher vorteilhaft, dass das Niveauregelsystem Anfragen zum Anlegen oder zum Lösen der Parkbremsen, gegebenenfalls einzelner Achsen, aussenden kann.

Ein weiteres, die Erfindung verbesserndes Verfahren sieht vor, dass durch ein Getriebesystem bei Umschalten eines Betätigungselements des Getriebes in eine oder aus einer Parkschaltstellung ein Datenpaket mit einer Aufforderung zur Bewegung des Bremsaktuators an die Steuereinheit gesendet wird.

Der Vorteil hiervon besteht darin, dass der Fahrer durch Umlegen der Gangschaltung in eine oder aus einer Parkschaltstellung eine entsprechende automatisierte Anpassung des Parkbremssystems veranlassen kann.

Eine besonders bevorzugte Variante der Erfindung sieht vor, dass durch ein Betriebsbremsanlagensystem beim Lösen von Betriebsbremsen während Stillstand des Kraftfahrzeugs oder beim Anlegen der Betriebsbremsen ein Datenpaket mit einer Aufforderung zur Bewegung des Bremsaktuators an die Steuereinheit gesendet wird.

Vorteilhaft daran ist unter anderem, dass dadurch möglich ist, die Parkbremsen automatisch zu lösen beziehungsweise anzulegen, wenn die Betriebsbremsen, beispielsweise vom Fahrer über ein Bremspedal betätigt, dies jeweils beim Losfahren oder Anhalten des Fahrzeugs vorgeben. Ein separates Lösen oder Anlegen der Parkbremsen, was einen zusätzlichen Arbeitsschritt bedeutet und insbesondere gegebenenfalls durch den Fahrer vergessen werden kann, entfällt somit. Auch ist dadurch möglich, dass die Parkbremsen beispielsweise während der Fahrt zum Zweck einer schnelleren Abbremsung bei einer Betätigung der Betriebsbremsen und entsprechender Signalisierung des Betriebsbremsanlagensystems angelegt werden, beispielsweise zur Durchführung einer Vollbremsung oder Notbremsung mit möglichst hoher Bremskraft.

Eine weitere besonders bevorzugte Ausgestaltung der Erfindung umfasst, dass durch das externe Steuersystem über die Steuereinheit unabhängig voneinander eine zum Parkbremssystem gehörige Betriebsbremse des Anhängers und eine zum Parkbremssystem gehörige Feststellbremse des Sattelschleppers angesteuert wird.

Der Vorteil dieses Verfahrens umfasst, dass es somit möglich ist, durch unabhängiges Ansteuern der einzelnen Bremsen des Parkbremssystems verschiedene Bremsstrategien durchzuführen, was mit einem eindimensionalen, im Stand der Technik allgemein bekannten Betätigungselement, nicht möglich ist.

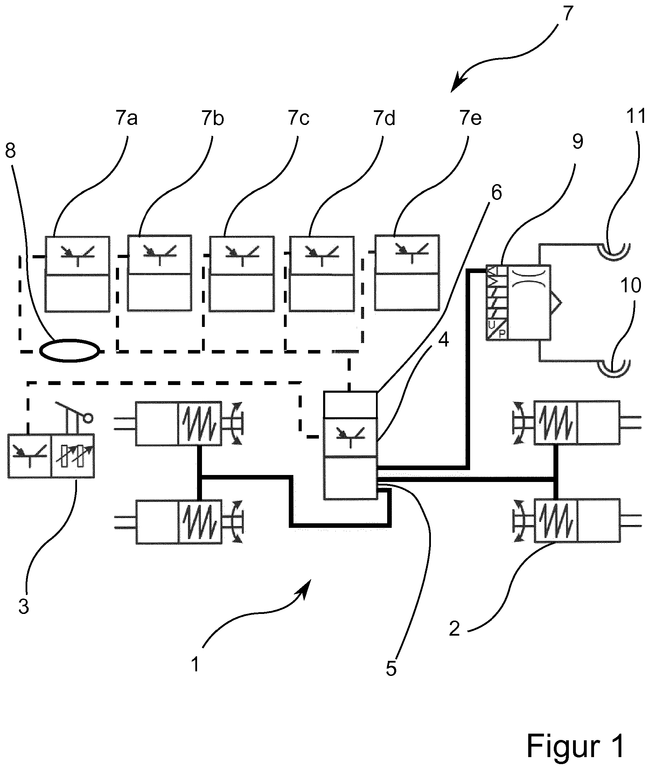

Weitere die Erfindung verbessernde Maßnahmen werden nachstehend gemeinsam mit der Beschreibung eines bevorzugten Ausführungsbeispiels der Erfindung anhand der einzigen Figur näher dargestellt.

Die Figur zeigt den schematisierten Aufbau eines erfindungsgemäßen Parkbremssystems.

Gemäß Figur umfasst das elektronische Parkbremssystem 1 eines hier nicht weiter dargestellten Kraftfahrzeuges einen in eine Bremsposition zur Bremskraftbeaufschlagung eines hier nicht dargestellten Rades des Kraftfahrzeugs bewegbaren Bremsaktuator 2, ein manuell betätigbares Betätigungselement 3 in Form eines monostabilen Druckknopfes zur Ansteuerung des Bremsaktuators 2 durch einen Benutzer, eine damit elektronisch kommunizierende Steuereinheit 4 zur Ansteuerung eines mit dem Bremsaktuator 2 verbundenen Steuerventils 5. Die Steuereinheit 4 verfügt dabei über eine Schnittstelle 6 zur Kommunikation mit mehreren, den Betriebszustand des Kraftfahrzeugs definierende Aktuatoren und/oder Sensoren umfassenden, externen Steuersystemen 7.

Diese bestehen dabei aus einem Niveauregelsystem 7a, einem Fahrtassistenzsystem 7b, einem Betriebsbremsanlagensystem 7c, einem Getriebesystem 7d und einem Bodybuilder-Modul 7e.

Ferner ist die Steuereinheit 4 an ein Anhänger-Steuerventil 9 angeschlossen, welches mit der Druckluftversorgung 10 und den Betriebsbremsen 11 verbunden ist.

Im Betrieb wird erfindungsgemäß durch mindestens eins der externen Steuersysteme 7 ein Datenpaket 8 ausgesendet, welches eine Aufforderung zur Bewegung eines Bremsaktuators 2 beinhaltet. Nach Auswertung einer solchen Aufforderung durch die Steuereinheit 4 und gegebenenfalls nach Abgleich mit dem Betriebszustand des Betätigungselementes 3 wird gegebenenfalls der Bremsaktuator 2 bewegt.

Dabei wird bei der Auswertung des Datenpakets 8 durch die Steuereinheit 4 die Funktionstüchtigkeit (beispielsweise funktionstüchtig oder beschädigt) und der Betriebszustand (beispielsweise betätigt oder nicht betätigt) des Betätigungselements 3 berücksichtigt, wobei die im Datenpaket 8 enthaltene Anfrage in Abhängigkeit des Betriebszustandes ausgeführt oder ignoriert oder zeitlich verzögert oder in ihrer Priorität herabgesetzt wird. Wird das Betätigungselement 3 beispielsweise gleichzeitig mit dem Empfang des Datenpakets 8 betätigt, also während beispielsweise das Betätigungselement in Form eines Druckknopfs gedrückt ist, so wird das automatisiert abgesetzte Datenpaket 8 mit Rücksicht auf die manuell eingesteuerte Anfrage durch den Fahrer zurückgestellt. Auch wird beachtet, ob der Fahrer beispielsweise aufgrund eines beschädigten Betätigungselementes 3 nicht in der Lage ist, die Bremsaktuatoren 2 manuell anzusteuern.

Außerdem kann im Betrieb nach einer Notbremsung durch das Fahrtassistenzsystem 7b ein Datenpaket 8 mit einer Aufforderung zur Bewegung des Bremsaktuators 2 in dessen Bremsposition an die Steuereinheit 4 gesendet werden.

Auch beim Starten oder Stoppen des Fahrzeugs kann durch das Fahrtassistenzsystem 7b ein Datenpaket 8 mit einer Aufforderung zur Bewegung eines Bremsaktuators 2 an die Steuereinheit 4 gesendet werden, so dass die Parkbremsen gegebenenfalls automatisch gelöst oder angezogen werden.

Durch das Bodybuilder-Modul 7e kann ebenfalls ein Datenpaket 8 mit einer Aufforderung zur Bewegung des Bremsaktuators 2 an die Steuereinheit 4 gesendet werden. Somit kann der Fahrer beispielsweise über eine Schalttafel auf einem Bodybuilder-Modul 7e in Form einer Hebebühne insbesondere außerhalb der Fahrerkabine die Bremsaktuatoren 2 des Parkbremssystems 1 lösen oder anlegen.

Das Niveauregelsystem 7a kann im Betrieb ein Datenpaket 8 mit einer Aufforderung zur Bewegung des Bremsaktuators 2 an die Steuereinheit senden, insbesondere um eine Bewegung der Achsen des Fahrzeugs relativ zueinander zu ermöglichen beziehungsweise zu verhindern.

Ferner kann bei Umschalten der Gangschaltung in eine Parkschaltstellung oder aus einer Parkschaltstellung durch das Getriebesystem 7d ein Datenpaket 8 mit einer Aufforderung zur Bewegung des Bremsaktuators 2 an die Steuereinheit 4 gesendet werden. Somit kann die Parkbremse gegebenenfalls automatisch gelöst oder angezogen werden.

Das Betriebsbremsanlagensystem 7c kann ebenfalls zu diesem Zweck beim Lösen von Betriebsbremsen während Stillstand des Kraftfahrzeugs oder beim Anlegen der Betriebsbremsen ein Datenpaket 8 mit einer Aufforderung zur Bewegung des Bremsaktuators 2 an die Steuereinheit 4 senden. Diese Funktionalität kann auch bei einer Voll- oder Notbremsung eingesetzt werden, zur schnelleren Abbremsung des Fahrzeugs.

In jedem Fall können über die Steuereinheit 4 die verschiedenen Bremsen des Parkbremssystems unabhängig voneinander angesteuert werden, beispielsweise hier die Feststellbremsen des Sattelschleppers und unabhängig davon die Betriebsbremsen 11 des Anhängers.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es auch denkbar, dass die externen Steuersysteme 7 über einen Datenbus, beispielsweise einen CAN-Bus miteinander und mit der erfindungsgemäßen Schnittstelle der Steuereinheit verbunden sind.

### Bezugszeichen

- 1: Parkbremssystem
- 2: Bremsaktuator
- 3: Betätigungselement
- 4: Steuereinheit
- 5: Steuerventil
- 6: Schnittstelle
- 7: externes Steuersystem
- 7a: Niveauregelsystem
- 7b: Fahrtassistenzsystem
- 7c: Betriebsbremsanlagensystem
- 7d: Getriebesystem
- 7e: Bodybuilder-Modul
- 8: Datenpaket
- 9: Anhänger-Steuerventil
- 10: Luftdruckversorgung
- 11: Betriebsbremsen

## Patentansprüche

1. Elektronisches Parkbremssystem (1) eines Kraftfahrzeugs, umfassend einen in eine Bremsposition zur Bremskraftbeaufschlagung eines Rades des Kraftfahrzeugs bewegbaren Bremsaktuator (2), ein manuell betätigbares Betätigungselement (3) zur Ansteuerung des Bremsaktuators (2) durch einen Benutzer, eine mit dem Betätigungselement (3) elektronisch kommunizierende Steuereinheit (4) zur Ansteuerung eines mit dem Bremsaktuator (2) verbundenen Steuerventils (5), wobei die Steuereinheit (4) über eine Schnittstelle (6) zur Kommunikation mit einem, den Betriebszustand des Kraftfahrzeugs definierende Sensoren und / oder Aktoren umfassenden, externen Steuersystem (7) verfügt, sowie über Rechenanweisungen zur Auswertung eines durch das Steuersystem (7) versandten Datenpakets (8), zur Ansteuerung des Bremsaktuators (2) des Parkbremssystems (1) bei entsprechender Auswertung des Datenpakets (8), **dadurch gekennzeichnet, dass** das Kraftfahrzeug einen Sattelschlepper und einen Anhänger umfasst, und dass durch das externe Steuersystem (7) über die Steuereinheit (4) unabhängig voneinander eine zum Parkbremssystem (1) gehörige Betriebsbremse des Anhängers und eine zum Parkbremssystem (1) gehörige Feststellbremse des Sattelschleppers ansteuerbar sind.

2. Elektronisches Parkbremssystem (1) nach Anspruch 1,
**dadurch gekennzeichnet, dass** das mindestens eine externe Steuersystem (7) einer Gruppe von Steuersystemen zugehört, der unter anderem Fahrtassistenzsysteme (7b), Betriebsbremsanlagensysteme (7c), Getriebesysteme (7d), Bodybuilder-Module (7e), Mensch-Maschine-Schnittstellen, Anhängerkontrollsysteme und Niveauregelsysteme (7a) zugeordnet sind.

3. Elektronisches Parkbremssystem (1) nach einem der vorherigen Ansprüche, **dadurch gekennzeichnet, dass** die Kommunikation auf verschlüsselten, eine Prioritätsinformation und / oder eine Identifikation des kommunizierenden Steuersystems (7) enthaltenden Datenpaketen (8) basiert ist.

4. Kraftfahrzeug, mit einem elektronischen Parkbremssystem (1), dieses umfassend mindestens einen Bremsaktuator (2) zur Kraftbeaufschlagung mindestens eines Rades oder einer Achse des Kraftfahrzeugs, ein manuell betätigbares Betätigungselement (3) zur Ansteuerung des Bremsaktuators (2) durch einen Benutzer sowie eine damit elektronisch kommunizierende Steuereinheit (4) zur Ansteuerung eines mit dem Bremsaktuator (2) verbundenen Steuerventils (5), sowie mindestens ein externes Steuersystem (7), dieses den Betriebszustand des Kraftfahrzeugs definierende Aktuatoren und / oder Sensoren aufweisend,
**dadurch gekennzeichnet, dass** das elektronische Parkbremssystem (1) als elektronisches Parkbremssystem (1) gemäß einem der Ansprüche 1 - 3 ausgebildet ist.

5. Verfahren zum Betrieb eines elektronischen Parkbremssystems (1) nach einem der Ansprüche 1 - 3, wobei durch ein externes Steuersystem (7) ein Datenpaket (8) mit einer Aufforderung an das elektronische Parkbremssystem (1) gesendet wird, diese Aufforderung durch die Steuereinheit (4) ausgewertet wird, und bei positiver Auswertung ein Bremsaktuator (2) des Parkbremssystems (1) angesteuert wird, und dass durch das externe Steuersystem (7) über die Steuereinheit (4) unabhängig voneinander eine zum Parkbremssystem (1) gehörige Betriebsbremse des Anhängers und eine zum Parkbremssystem (1) gehörige Feststellbremse des Sattelschleppers angesteuert wird.

6. Verfahren nach Anspruch 5,
**dadurch gekennzeichnet, dass** bei der Auswertung des Datenpakets (8) durch die Steuereinheit (4) ein Parameter aus einer Parametergruppe berücksichtigt wird, der die Funktionstüchtigkeit und / oder der Betriebszustand des Betätigungselements (3) zugeordnet sind, wobei die im Datenpaket (8) enthaltene Anfrage in Abhängigkeit des Parameters ausgeführt oder ignoriert oder zeitlich verzögert und / oder in ihrer Priorität herabgesetzt wird.

7. Verfahren nach einem der Ansprüche 5 oder 6,
**dadurch gekennzeichnet, dass** nach einer Notbremsung durch ein Fahrtassistenzsystem (7b) ein Datenpaket (8) mit einer Aufforderung zur Bewegung des Bremsaktuators (2) in dessen Bremsposition an die Steuereinheit (4) gesendet wird.

8. Verfahren nach einem der Ansprüche 5 bis 7,
**dadurch gekennzeichnet, dass** durch ein Fahrtassistenzsystem (7b) zum Starten oder Stoppen des Fahrzeugs ein Datenpaket (8) mit einer Aufforderung zur Bewegung des Bremsaktuators (2) an die Steuereinheit (4) gesendet wird.

9. Verfahren nach einem der Ansprüche 5 bis 8,
**dadurch gekennzeichnet, dass** durch ein Bodybuilder-Modul (7e) ein Datenpaket (8) mit einer Aufforderung zur Bewegung des Bremsaktuators (2) an die Steuereinheit (4) gesendet wird.

10. Verfahren nach einem der Ansprüche 5 bis 9,
**dadurch gekennzeichnet, dass** durch ein Niveauregelsystem (7a) ein Datenpaket (8) mit einer Aufforderung zur Bewegung des Bremsaktuators (2) an die Steuereinheit (4) gesendet wird.

11. Verfahren nach einem der Ansprüche 5 bis 10,
**dadurch gekennzeichnet, dass** durch ein Getriebesystem (7d) bei Umschalten eines Betätigungselements des Getriebes in eine oder aus einer Parkschaltstellung ein Datenpaket (8) mit einer Aufforderung zur Bewegung des Bremsaktuators (2) an die Steuereinheit (4) gesendet wird.

12. Verfahren nach einem der Ansprüche 5 bis 11,
**dadurch gekennzeichnet, dass** durch ein Betriebsbremsanlagensystem (7c) beim Lösen von Betriebsbremsen während Stillstand des Kraftfahrzeugs oder beim Anlegen der Betriebsbremsen ein Datenpaket (8) mit einer Aufforderung zur Bewegung des Bremsaktuators (2) an die Steuereinheit (4) gesendet wird.

## Claims

1. Electronic parking brake system (1) of a motor vehicle, comprising a brake actuator (2) which can be moved to a braking position in order to act upon a wheel of the motor vehicle with a braking force, a manually operated actuating element (3) for a user to control the brake actuator (2), a control unit (4) that communicates electronically with the actuating element (3) for actuating a control valve (5) connected to the brake actuator (2), wherein the control unit (4) comprises an interface (6) for communicating with an external control system (7) which comprises sensors and/or actors that define the operating condition of the motor vehicle as well as computation instructions for evaluating a data packet (8) sent by the control system (7) for actuating the brake actuator (2) of the parking brake system (1) when the data packet (8) is evaluated correspondingly, **characterised in that** the motor vehicle comprises a tractor and a trailer, and by way of the external control system (7) via the control unit (4), independently of one another, a service brake of the trailer which is part of the parking brake system (1) and a parking brake of the tractor which is part of the parking brake system (1) can be actuated.

2. Electronic parking brake system (1) according to Claim 1,
**characterised in that** the at least one external control system (7) is part of a group of control systems which, among other things, are associated with drive assistance systems (7b), service brake assembly systems (7c), transmission systems (7d), bodybuilder modules (7e), man-machine interfaces, trailer control systems and ride level regulation systems (7a).

3. Electronic parking brake system (1) according to either of the preceding claims,
**characterised in that** the communication is based on encrypted data packets (8) that contain priority information and/or an identification of the communicating control system (7).

4. Motor vehicle with an electronic parking brake system (1), which comprises at least one brake actuator (2) for applying force to at least one wheel or an axle of the motor vehicle, a manually actuated actuation element (3) for the brake actuator (2) to be actuated by a user, as well as a control unit (4) that communicates with it electronically in order to actuate a control valve (5) connected to the brake actuator (2), and at least one external control system (7), the latter comprising actuators and/or sensors which define the operating condition of the motor vehicle,
**characterised in that** the electronic parking brake system (1) is in the form of an electronic parking brake system (1) according to any of Claims 1 to 3.

5. Method for operating an electronic parking brake system (1) according to any of Claims 1 to 3, wherein a data packet (8) is sent by an external control system (7) to the electronic parking brake system (1) with a request, the said request is evaluated by the control unit (4), and if the evaluation is positive a brake actuator (2) of the parking brake system (1) is actuated, and by way of the external control system (7) via the control unit (4), independently of one another, a service brake of the trailer which is part of the parking brake system (1) and a parking brake of the tractor which is part of the parking brake system (1) can be actuated.

6. Method according to Claim 5,
**characterised in that** in the evaluation of the data packet (8) by the control unit (4), a parameter from a group of parameters is taken into account, which parameters are associated with the functionality and/or the operating condition of the actuation element (3), wherein the request contained in the data packet (8) is carried out or ignored or delayed and/or assigned a lower priority, depending on the said parameter.

7. Method according to either of Claims 5 or 6,
**characterised in that** after an emergency braking operation, a data packet (8) is sent by a driver assistance system (7b) to the control unit (4) with a request to move the brake actuator (2) to its braking position.

8. Method according to any of Claims 5 to 7,
**characterised in that** to start or stop the vehicle, a driver assistance system (7b) sends to the control unit (4) a data packet (8) with a request to move the brake actuator (2).

9. Method according to any of Claims 5 to 8,
**characterised in that** a data packet (8) is sent to the control unit (4) by a bodybuilder module (7e), with a request to move the brake actuator (2).

10. Method according to any of Claims 5 to 9,
**characterised in that** a data packet (8) with a request to move the brake actuator (2) is sent to the control unit (4) by a level regulation system (7a) with a request to move the brake actuator (2).

11. Method according to any of Claims 5 to 10,
**characterised in that** when an actuation element of the transmission is shifted into or out of a parking shift position, a data packet (8) is sent by a transmission system (7d) to the control unit (4) with a request to move the brake actuator (2).

12. Method according to any of Claims 5 to 11,
**characterised in that** when the service brakes are released while the motor vehicle is at rest or when the service brakes are applied, a data packet (8) is sent by a service brake assembly system (7c), with a request to move the brake actuator (2).

## Revendications

1. Système (1) électronique de frein de stationnement d'un véhicule automobile, comprenant un actionneur (2) de frein pouvant venir dans une position de freinage pour appliquer une force de freinage à une roue du véhicule automobile, un élément (3) d'actionnement pouvant être actionné manuellement pour la commande de l'actionneur (2) de frein par un utilisateur, une unité (4) de commande communiquant électroniquement avec l'élément (3) d'actionnement pour la commande d'une vanne (5) de commande reliée à l'actionneur (2) de frein, l'unité (4) de commande disposant d'une interface (6) pour la communication avec un système (7) extérieur de commande comprenant des capteurs et/ou des actionneurs définissant l'état de fonctionnement du véhicule automobile, ainsi que d'instructions de calcul pour l'exploitation d'un paquet (8) de données envoyé par le système (7) de commande pour la commande de l'actionneur (2) de frein du système (1) de frein de stationnement, en exploitant de manière adéquate le paquet (8) de données, **caractérisé en ce que** le véhicule automobile comprend un tracteur semi-remorque et une remorque et **en ce que**, par le système (7) extérieur de commande, peuvent être commandés, par l'unité (4) de commande, indépendamment l'un de l'autre, un frein de service de la remorque appartenant au système (1) de frein de stationnement et un frein d'arrêt du tracteur semi-remorque appartenant au système (1) de frein de stationnement.

2. Système (1) électronique de frein de stationnement suivant la revendication 1,
**caractérisé en ce que** le au moins un système (7) extérieur de commande appartient à un groupe de systèmes de commande, qui sont associés, entre autres, à des systèmes (7b) d'assistance à la conduite, à des systèmes (7c) d'installation de frein de service, à des systèmes (7d) de transmission, à des modules (7e) de bodybuilder, à des interfaces homme-machine, à des systèmes de commande de remorque et à des systèmes (7a) de réglage du niveau.

3. Système (1) électronique de frein de stationnement suivant l'une des revendications précédentes,
**caractérisé en ce que** la communication repose sur des paquets (8) de données chiffrées, contenant une information de priorité et/ou une identification du système (7) de commande communiquant.

4. Véhicule automobile, comprenant un système (1) électronique de frein de stationnement, celui-ci comprenant au moins un actionneur (2) de frein pour l'application d'une force à au moins une roue ou un essieu du véhicule automobile, un élément (3) d'actionnement pouvant être actionné manuellement pour la commande de l'actionneur (2) de frein par un utilisateur, ainsi qu'une unité (4) de commande, communiquant électroniquement, pour la commande d'une vanne (5) de commande reliée à l'actionneur (2) de frein, ainsi qu'au moins un système (7) extérieur de commande, celui-ci ayant des actionneurs et/ou des capteurs définissant l'état de fonctionnement du véhicule automobile,
**caractérisé en ce que** le système (1) électronique de frein de stationnement est constitué sous la forme d'un système (1) électronique de frein de stationnement suivant l'une des revendications 1 à 3.

5. Procédé pour faire fonctionner un système (1) électronique de frein de stationnement suivant l'une des revendications 1 à 3, dans lequel on envoie, par un système (7) extérieur de commande, un paquet (8) de données ayant une invitation au système (1) électronique de frein de stationnement, on exploite cette invitation par l'unité (4) de commande et, si l'exploitation est positive, on commande un actionneur (2) de frein du système (1) de frein de stationnement et en ce que, par le système (7) extérieur de commande, on commande, par l'unité (4) de commande, indépendamment l'un de l'autre, un frein de service de la remorque appartenant au système (1) de frein de stationnement et un frein d'arrêt du tracteur semi-remorque appartenant au système (1) de frein de stationnement.

6. Procédé suivant la revendication 5,
**caractérisé en ce que**, dans l'exploitation du paquet (8) de données par l'unité (4) de commande, on tient compte d'un paramètre choisi dans le groupe de paramètres, qui sont associés à l'aptitude à fonctionner et/ou à l'état de fonctionnement de l'élément (3) d'actionnement, les demandes contenues dans le paquet (8) de données étant, en fonction du paramètre, réalisées ou négligées ou retardées dans le temps et/ou abaissées dans leur priorité.

7. Procédé suivant l'une des revendications 5 ou 6,
**caractérisé en ce qu'**après un freinage d'urgence par un système (7b) d'assistance à la conduite, on envoie, à l'unité (4) de commande, un paquet (8) de données ayant une invitation à mettre l'actionneur (2) de frein dans sa position de freinage.

8. Procédé suivant l'une des revendications 5 à 7,
**caractérisé en ce que**, par un système (7b) d'assistance à la conduite pour faire démarrer ou arrêter le véhicule, on envoie à l'unité (4) de commande un paquet (8) de données ayant une invitation pour le déplacement de l'actionneur (2) de frein.

9. Procédé suivant l'une des revendications 5 à 8,
**caractérisé en ce que**, par un module (7e) de bodybuilder, on envoie à l'unité (4) de commande un paquet (8) de données ayant une invitation pour le déplacement de l'actionneur (2) de frein.

10. Procédé suivant l'une des revendications 5 à 9,
**caractérisé en ce que**, par un système (7a) de réglage du niveau, on envoie à l'unité (4) de commande un paquet (8) de données ayant une invitation pour le déplacement de l'actionneur (2) de frein.

11. Procédé suivant l'une des revendications 5 à 10,
**caractérisé en ce que**, par un système (7d) de transmission, on envoie à l'unité (4) de commande, lors de la commutation d'un élément d'actionnement de la transmission dans une position de commutation de stationnement ou hors d'une position de commutation de stationnement, un paquet (8) de données ayant une invitation pour le déplacement de l'actionneur (2) de frein.

12. Procédé suivant l'une des revendications 5 à 11,
**caractérisé en ce que**, par un système (7c) d'installation de frein de service, on envoie à l'unité (4) de commande, lors du desserrage de frein de service pendant l'arrêt du véhicule automobile ou lors de l'application de frein de service, un paquet (8) de données ayant une invitation pour le déplacement de l'actionneur (2) de frein.
